# EUROPÄISCHE PATENTSCHRIFT

(11) **EP 0 902 240 B1**
(45) Veröffentlichungstag und Bekanntmachung des Hinweises auf die Patenterteilung: **29.10.2003**
(21) Anmeldenummer: 98110531.5
(22) Anmeldetag: 09.06.1998
(51) Int. Cl.: F24D 19/10

(54) **Gerät zum Bereiten von Heizwasser und Brauchwasser**
Apparatus for preparing heating water and sanitary water
Appareil pour la préparation d'eau de chauffage et d'eau sanitaire

(30) Priorität: 11.09.1997 DE 19739828
(43) Veröffentlichungstag der Anmeldung: 17.03.1999
(73) Patentinhaber: ROBERT BOSCH GMBH, 70442 Stuttgart (DE)
(72) Erfinder: Kehl, Albin, 73098 Rechberghausen (DE); Kroell, Ulrich, 72654 Neckartenzlingen (DE); Debowski, Dobromil, 72764 Reutlingen (DE); Prahst, Eberhard, 73061 Ebersbach (DE)

(56) Entgegenhaltungen:
- DE-A- 4 114 619

## Beschreibung

### Stand der Technik

Die Erfindung geht aus von einem Gerät zum Bereiten von Heizwasser und Brauchwasser nach der Gattung des Hauptanspruchs. Diese Geräte haben den Vorteil, daß schon von Zapfbeginn an warmes Brauchwasser zur Verfügung steht, wenn der Heizwasserspeicher auf seine Bereitschaftstemperatur aufgeheizt ist. Dabei wird der das Brauchwasser erwärmende Sekundärwärmetauscher zunächst aus dem Wärmeinhalt des Heizwasserspeichers und erst danach unmittelbar aus dem Primärwärmetauscher versorgt. Zur Steuerung dieser Vorgänge sind bei einer bekannten Einrichtung (DE-A-41 14 619) Ventile mit motorischen oder magnetischen Antrieben vorgesehen, die verhältnismäßig kostenaufwendig sind.

### Vorteile der Erfindung

Die erfindungsgemäße Anordnung mit den Merkmalen des Hauptanspruchs hat demgegenüber den Vorteil, daß motorische oder magnetische Antriebe für die Ventile entfallen und andererseits eine mindestens zweistufige Umwälzpumpe auch unabhängig von der Brauchwassererwärmung zur Senkung der Stromkosten im Heizbetrieb gefordert ist.

Durch die in den Unteransprüchen aufgeführten Merkmale sind vorteilhafte Ausgestaltungen und Weiterbildungen der Anordnung nach dem Hauptanspruch möglich.

Bei Geräten mit einer modulierend gesteuerten Wärmequelle wird eine kurze Einregelzeit auf die gewünschte Brauchwassertemperatur erreicht, wenn die Umschaltung der Pumpenleistung auf eine höhere Stufe abhängig von der Temperatur des dem internen Leitungssystems zulaufenden Heizwassers bzw. des auslaufenden Brauchwassers erfolgt.

Die Wirtschaftlichkeit der Brauchwassererwärmung kann durch eine Sparschaltung erhöht werden, die in Nutzungspausen, z. B. nachts, kein Aufheizen des Heizwasserspeichers und beim Zapfen von Brauchwasser ein sofortiges Aktivieren des zweiten Leitungszweiges vorsieht. Im Winterbetrieb kann die Anordnung so getroffen sein, daß bei hohen Heizwassertemperaturen ein "Kaltstart", d. h. ein sofortiges Aktivieren des den Heizwasserspeicher umgehenden zweiten Leitungszweiges erfolgt und nur bei geringeren Heizwassertemperaturen für einen "Warmstart" der Heizwasserspeicher miteinbezogen wird.

Eine an sich übliche und bewährte Ausführung ergibt sich, wenn die sekundäre Ventileinrichtung als ein mit zwei Ausgängen versehenes Umsteuerventil ausgebildet ist. Der bei der Durchströmung des Ventils entstehende Druckverlust kann verringert werden, wenn dessen Steuerung abhängig vom Fördervolumen der Umwälzpumpe erfolgt. Zu diesem Zweck wird vorgeschlagen, daß der Zulaufanschluß des Ventils in ein düsenartig verengtes Rohr mündet, das gegen eine kugelig ausgebildete Umlenkfläche eines beweglich gelagerten Steuergliedes gerichtet ist, welches durch Federkraft gegen das Rohr gedrückt ist und mit den Mündungsrändern der Ausgangsöffnungen zusammenarbeitende Schließflächen trägt.

Diese Lösung hat auch den Vorteil, daß im Ruhezustand das Ventil gegenüber einer "Fremdzirkulation" verschlossen ist.

Eine einfache Lösung hierzu ergibt sich, wenn das Steuerglied ein schwenkbar gelagerter doppelarmiger Hebel ist, der an einem Hebelarm die kugelige Umlenkfläche trägt und dessen anderer Hebelarm zwischen die beiden sich koaxial gegenüberliegenden Mündungsränder der Ausgangsöffnungen greift und dort ein beidseitig mit Schließflächen versehenes Schließglied beweglich angelenkt trägt.

Der Sekundärwärmetauscher kann wie an sich bekannt, raumsparend und die Effektivität des Wärmeaustausches steigernd in den Heizwasserspeicher integriert sein, der zur weiteren Raumersparnis vorteilhaft den wasserseitigen Teil eines Ausdehnungsgefäßes bilden kann.

Bei in den Heizwasserspeicher integrierter Anordnung des Sekundärwärmetauschers wird vorgeschlagen, daß eine das Brauchwasser führende Rohrschlange von einem im Wasservolumen des Heizwasserspeichers liegenden, heizwasserführenden Strömungskanal umgeben ist, dessen ausgangsseitiges Ende an eine den Primärwärmetauscher mit dem Rücklaufanschluß für das Heizungsnetz verbindende Rücklaufleitung angeschlossen ist und dessen eingangsseitige Öffnung zum Eintritt des im Heizwasserspeicher befindlichen Heizwassers bestimmt ist, und daß ferner die sekundäre Ventileinrichtung den Zugang des Heizwassers zum Eingang des Strömungskanales überwacht.

In diesem Fall ergibt sich eine kostengünstige Lösung, wenn die sekundäre Ventileinrichtung ein einfaches Auf-Zu-Ventil ist, das eine der eingangsseitigen Öffnung des Strömungskanals benachbarte Durchgangsöffnung in einer Leitwand steuert, welche das in den Heizwasserspeicher einströmende Wasser vom Eingang des Strömungskanals weg in eine weiter entfernt liegende Speicherzone leitet.

Eine kompakte Bauform, die kleine Geräteabmessungen erlaubt und bei der verschiedene Verbindungsleitungen entfallen, ergibt sich, wenn außer dem Sekundärwärmetauscher auch das Umsteuerventil, die sekundäre Ventileinrichtung und vorzugsweise auch die Umwälzpumpe im Heizwasserspeicher integriert sind.

In den Startphasen des Gerätes und beim Zapfen von kleinen Brauchwassermengen kann die Steuerung vorteilhaft einen Kurzschlußkreis aktivieren, der unter Ausschluß des Primärwärmetauschers nur über eine Umwälzpumpe und das interne Leitungssystems des Sekundärwärmetauschers führt.

Der Kurzschlußkreis kann einfach das als Vier-Wege-Ventil ausgebildete Umsteuerventil und die in einer der vom Primärwärmetauscher zu den Heizungsnetzanschlüssen führenden Leitungen eingebaute Umwälzpumpe enthalten. Eine andere Möglichkeit besteht darin, im Kurzschlußkreis eine eigene Umwälzpumpe und ein Rückschlagventil vorzusehen.

Ein durch Wegfall eines magnetischen oder motorischen Ventilantriebs erzielbarer Kostenvorteil ergibt sich bei Geräten mit einer in mindestens zwei Leistungsstufen schaltbaren Umwälzpumpe, wenn auch das Umsteuerventil in einer der vom Primärwärmetauscher zu den Heizungsnetzanschlüssen führenden Leitungen abhängig von der Leistung der Umwälzpumpe gesteuert ist.

### Zeichnung

Vier Ausführungsbeispiele der Erfindung sind in der Zeichnung dargestellt und in der nachfolgenden Beschreibung näher erläutert. Es zeigen:
Figur 1 schematisch ein Gerät mit getrennter Anordnung von Heizwasserspeicher und Sekundärwärmetauscher mit einer ersten Ausführungsform der sekundären Ventileinrichtung,
die Figuren 2 und 3 je eine konstruktive Lösung der sekundären Ventileinrichtung gemäß einem zweiten und einem dritten Ausführungsbeispiel,
und Figur 4 als viertes Ausführungsbeispiel schematisch eine Lösung mit in einem Heizwasserspeicher integrierten Sekundärwärmetauscher.

### Beschreibung der Ausführungsbeispiele

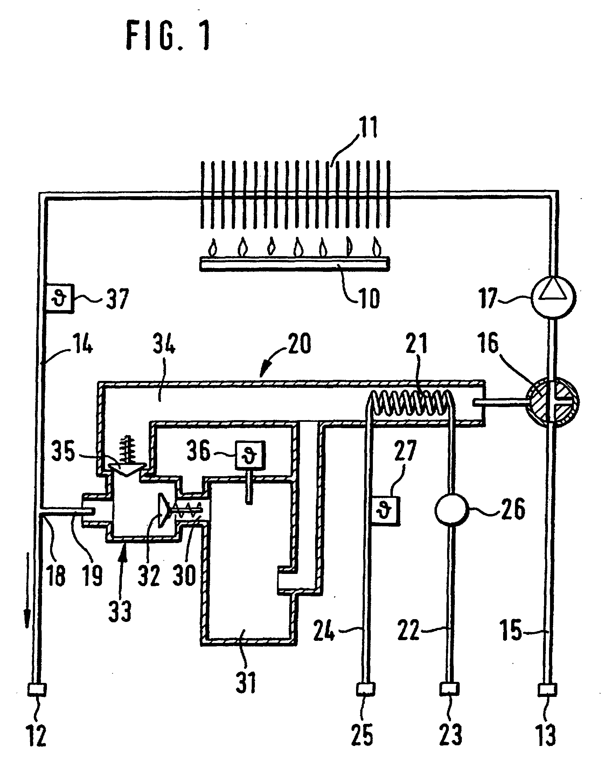

Gemäß Figur 1 ist über einer als Gasbrenner 10 ausgebildeten Wärmequelle ein Primärwärmetauscher 11 für Heizwasser angeordnet, der mit Anschlüssen 12, 13 für ein externes Heizungsnetz über eine Vorlaufleitung 14 und eine Rücklaufleitung 15 verbunden ist. Diese führt über ein Umsteuerventil 16 und eine in mindestens zwei Leistungsstufen schaltbare Umwälzpumpe 17. An die Vorlaufleitung 14 ist bei 18 eine Leitung 19 angeschlossen, die über ein insgesamt mit der Bezugszahl 20 bezeichnetes internes Leitungssystem zum Umsteuerventil 16 führt. Im Leitungssystem 20 ist ein Sekundärwärmetauscher 21 für die Brauchwasserbereitung vorgesehen, dessen brauchwasserführende, vom Heizwasser umgebende Rohrschlange über eine Zulaufleitung 22 mit einem Kaltwasseranschluß 23 und über eine Auslaufleitung 24 mit einem Zapfstellenanschluß 25 verbunden ist. In der Zulaufleitung 22 ist eine die durchfließende Wassermenge erfassende Turbine 26 und in der Auslaufleitung 24 ein die Temperatur des auslaufenden Brauchwassers erfassender Temperaturfühler 27 angeordnet.

Das interne Leitungssystem 20 hat einen ersten Leitungszweig 30, der über einen Heizwasserspeicher 31 zum Sekundärwärmetauscher 21 führt. Der Leitungszweig 30 ist von einem Schließglied 32 einer insgesamt mit der Bezugszahl 33 versehenen sekundären Ventileinrichtung überwacht, das durch Federkraft in Offenstellung gehalten und vom Zulaufdruck des Heizwassers in die Schließstellung gedrückt wird. Das Leitungssystem 20 hat einen zweiten Leitungszweig 34, der den Heizwasserspeicher 31 umgeht und unmittelbar zum Sekundärwärmetauscher 21 führt. Der zweite Leitungszweig 34 ist von einem Schließglied 35 der Ventileinrichtung 33 überwacht, das durch Federkraft in Schließstellung gehalten und durch den Zulaufdruck des Heizwassers in die Offenstellung verschoben wird.

Die Ventileinrichtung 20 ist abhängig von der Leistung der Umwälzpumpe 17 derart gesteuert, daß im Betrieb mit kleinerer Leistungsstufe die Schließglieder 32, 35 in der dargestellten Lage verbleiben, d. h. den ersten Leitungszweig 30 offen und den zweiten Leitungszweig 34 geschlossen halten. Beim Umschalten der Umwälzpumpe 17 in eine höhere Leistungsstufe werden das Schließglied 32 in die Schließstellung und das Schließglied 35 in die Offenstellung überführt, wonach zulaufendes Heizwasser unter Umgehung des Heizwasserspeichers direkt zum Sekundärwärmetauscher 21 gelangt. Ein die Wassertemperatur im Heizwasserspeicher 31 erfassender Temperaturfühler 36 ist wie bekannt, Teil einer Vorrangschaltung, die den Gasbrenner 10 aktiviert und durch Beeinflussung des Umsteuerventils 16 einen über das interne Leitungssystem führenden inneren Heizkreis herstellt, sobald und solange die Speichertemperatur unter einen vorgegebenen Wert fällt bzw. diesen noch nicht erreicht hat.

Beim Zapfen von Brauchwasser stellt das Signal der Turbine 26 das Umsteuerventil 16 ohne Rücksicht auf das Temperaturniveau im Heizwasserspeicher 31 und auf eine etwa vorhandene Wärmeanforderung des Heizungsnetzes auf den über das Leitungssystem 20 führenden inneren Heizkreis um. Es sei angenommen, daß bei Zapfbeginn der Heizwasserspeicher 31 voll aufgeheizt ist. Dann schaltet die Steuerung die geringere Leistungsstufe der Umwälzpumpe 17 ein, wenn und solange ein Temperaturfühler 37 in der Vorlaufleitung 14 eine unter einem vorgegebenen Wert liegende Temperatur des Heizwassers signalisiert. Dadurch wird der Heizwasserspeicher 31 aktiviert und das durchlaufende Brauchwasser aus dem Energieinhalt des Heizwasserspeichers 31 erwärmt.

Sobald die Vorlauftemperatur des Heizwassers den vorgeschriebenen Wert erreicht hat, schaltet die Steuerung die höhere Leistungsstufe der Umwälzpumpe 17 ein, wobei die Ventileinrichtung 33 anspricht und das Heizwasser direkt zum Sekundärwärmetauscher 21 fließen läßt. Auf diese Weise ist sichergestellt, daß sofort bei Zapfbeginn warmes Brauchwasser zur Verfügung steht und die Auslauftemperatur schnell eingeregelt wird. Die Umschaltung der Umwälzpumpe 17 von der geringeren auf die höhere Leistungsstufe könnte auch zeitlich gesteuert erfolgen oder wenn die vom Temperaturfühler 27 erfaßte Auslauftemperatur des Brauchwassers den vorgeschriebenen Wert erreicht hat.

Wenn bei Zapfbeginn der Heizwasserspeicher 31 beispielsweise im Rahmen einer in den Nachtstunden aktivierten Sparschaltung nicht aufgeheizt ist, schaltet die Steuerung sofort die höhere Leistungsstufe der Umwälzpumpe 17 ein, so daß das auslaufende Brauchwasser ohne größere Zeitverzögerung auf die gewünschte Temperatur aufgeheizt wird.

Bei nicht dargestellten Alternativlösungen könnten die beiden Schließglieder 32, 35 der sekundären Ventileinrichtung 33 auch miteinander starr oder gelenkig verbunden und durch eine einzige Feder beaufschlagt sein. Bei der dargestellten Ausführung erfolgt die Umschaltung von dem einen auf den anderen Leistungszweig 30 bzw. 34 abhängig vom Förderdruck der Umwälzpumpe 17. Bei der Umströmung der Schließglieder 32, 35 muß jedoch ein Druckverlust erzeugt werden, der die Verluste des Gesamtsystems nicht unwesentlich erhöht. Ein geringerer Druckverlust ergibt sich, wenn die Ventileinrichtung so ausgebildet ist, daß die Umschaltung wie bei den beiden nachstehend behandelten Lösungen abhängig vom geförderten Volumenstrom erfolgt.

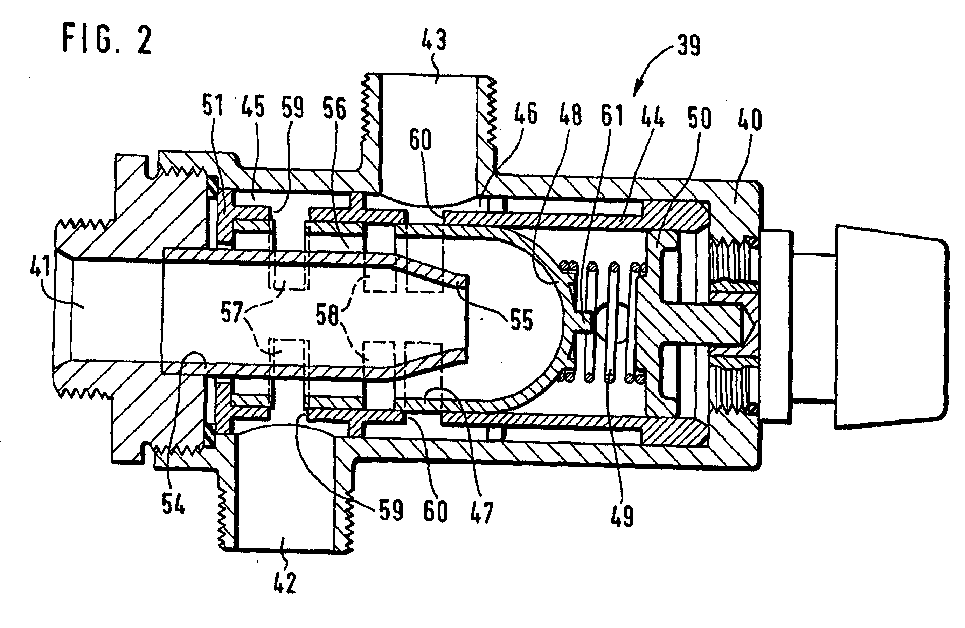

Bei der als ganzes mit der Bezugszahl 39 bezeichneten Ventileinrichtung nach Figur 2 ist ein Ventilgehäuse 40 mit einem axialen Einlaßstutzen 41 und zwei radialen Auslaßstutzen 42, 43 vorgesehen, in das eine Ventilbuchse 44 fest eingespannt ist. Diese begrenzt mit dem Ventilgehäuse 40 zwei Ringkammern 45, 46, von denen die eine, 45, mit dem Auslaßstutzen 42 und die andere, 46, mit dem Auslaßstutzen 43 korrespondiert. In der Ventilbuchse 44 ist eine Steuerhülse 47 verschiebbar gelagert, deren vom Einlaßstutzen 41 abgekehrter Boden 48 kugelig gewölbt ausgeführt ist. An der Steuerhülse 47 greift eine Ventilfeder 49 an, die sich an einer einstellbaren Anschlagscheibe 50 abstützt und die Steuerhülse 47 gegen eine an der Ventilbuchse 44 angeordnete Schulter 51 drückt.

Mit dem Einlaßstutzen 41 ist ein Rohrstück 54 fest verbunden, das sich zentral in die Steuerhülse 47 hinein erstreckt und mit seinem düsenartig verengten Mündungsbereich 55 dem kugeligen Boden 48 der Steuerhülse 47 gegenüberliegt. Zwischen Rohrstück 54 und Steuerhülse 47 ist ein Ringraum 56 vorhanden, in dessen Bereich die Steuerhülse 47 in zwei axial zueinander versetzten Radialebenen mit je einem Paar von sich gegenüberliegenden Schlitzöffnungen 57 und 58 versehen ist. Die Ventilbuchse 44 weist zwei axial versetzte Paare von Schlitzöffnungen 59 und 60 auf, von denen die einen, 59, in die Ringkammer 45 und die anderen, 60, in die Ringkammer 46 münden. In der dargestellten Lage ist der Innenraum der Steuerhülse 47 mit dem Auslaßstutzen 42 verbunden, wogegen die Verbindung zum Auslaßstutzen 43 unterbrochen ist. Die Steuerhülse 47 ist gegen die Kraft der Ventilfeder 49 verschiebbar, bis eine Nase 61 an der Steuerhülse 47 zur Anlage an der Anschlagscheibe 50 kommt. In dieser Stellung ist der Innenraum der Steuerhülse 47 mit dem Auslaßstutzen 43 verbunden, wogegen die Verbindung zum Auslaßstutzen 42 unterbrochen ist.

Beim Einsatz der Ventileinrichtung 39 in das interne Leitungssystem gemäß Figur 1 ist der Auslaßstutzen 42 mit dem Leitungszweig 30 und der Auslaßstutzen 43 mit dem Leitungszweig 34 verbunden. Der über die Leitung 19 und den Einlaßstutzen 41 ankommende Heizwasserstrom wird im Rohrstück 54 beschleunigt und der austretende Wasserstrahl am Boden 48 der Steuerhülse 47 verlustarm um 180° umgelenkt. Die dabei auf die Steuerhülse 47 ausgeübte Strahlkraft vermag jedoch die Ventilfeder 49 nicht zu überwinden, wenn die Umwälzpumpe 17 in der geringeren Leistungsstufe arbeitet. Die Steuerhülse 47 behält dann die dargestellte Lage bei, in der sie das zufließende Heizwasser über den Heizwasserspeicher 31 zum Sekundärwärmetauscher 21 leitet. In der höheren Leistungsstufe der Umwälzpumpe 17 dagegen überwindet die Strahlkraft des Heizwassers die Ventilfeder 49, so daß die Steuerhülse 47 in die andere Endstellung verschoben wird und den unmittelbaren Weg zum Sekundärwärmetauscher 21 über den Leitungszweig 34 freigibt.

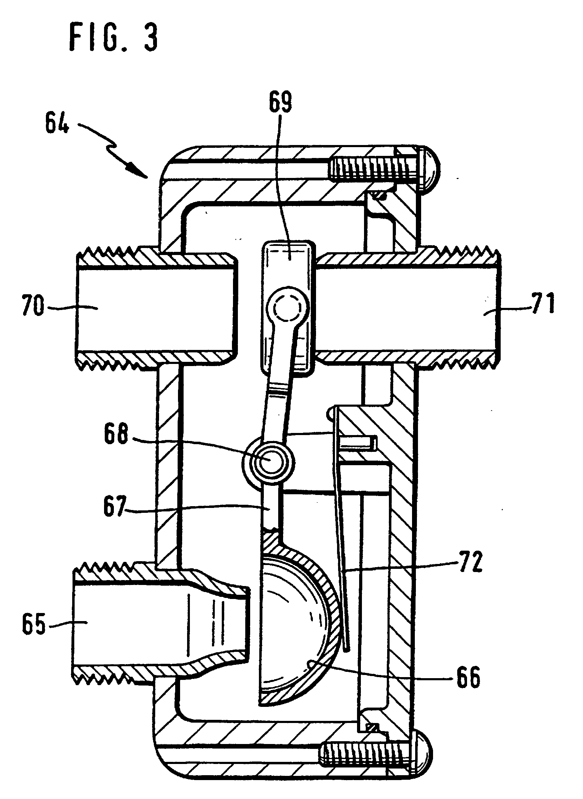

Die als ganzes mit der Bezugszahl 64 versehene Ventileinrichtung nach Figur 3 stimmt mit jener nach Figur 2 insoweit überein, als ein düsenartig verengter Zulaufstutzen 65 gegen eine kugelig gewölbte Umlenkfläche 66 an einem Steuerglied 67 gerichtet ist. Das Steuerglied 67 ist als ein bei 68 schwenkbar gelagerter doppelarmiger Hebel ausgebildet, an dessen einem Ende die Umlenkfläche 66 angeordnet und an dessen anderem Ende ein Schließglied 69 beweglich angelenkt ist. Koaxial zum Schließglied 69 liegen sich zwei Auslaßstutzen 70, 71 gegenüber, von denen bei Anwendung der Ventileinrichtung 64 in einem Gerät gemäß Figur 1 der Auslaßstutzen 70 dem Leitungszweig 30 und der Auslaßstutzen 71 dem Leitungszweig 34 zuzuordnen ist. Auf das Steuerglied 67 wirkt eine Blattfeder 72 ein, die das Steuerglied 67 im Uhrzeigersinn zu verschwenken sucht. Der Schwenkwinkel wird durch das Zusammenwirken des Schließglieds 69 mit den Mündungsrändern der Auslaßstutzen 70, 71 begrenzt, wobei jeweils der eine von ihnen geöffnet und der andere geschlossen ist. Das Steuerglied 67 nimmt die dargestellte Lage ein, wenn der Volumenstrom des zulaufenden Heizwassers einen vorgegebenen Wert noch nicht erreicht hat. Wenn er nach dem Schalten der Umwälzpumpe 17 in die höhere Leistungsstufe diesen Wert überschreitet, überwindet die auf die Umlenkfläche 66 ausgeübte Reaktionskraft die Blattfeder 72, so daß das Steuerglied 67 in die andere Endlage schwenkt und die gewünschte Umlenkung des Heizwasserstromes bewirkt.

Die Ventileinrichtungen nach den Figuren 2 und 3 könnten auch als Umsteuerventil in der Vor- bzw. Rücklaufleitung eines Heizgerätes eingesetzt werden.

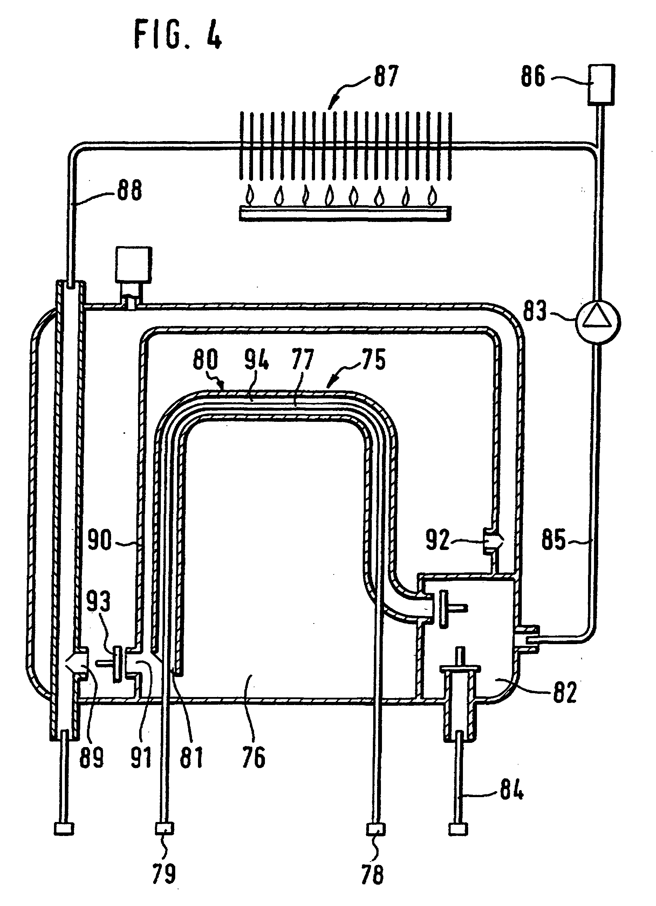

Beim Gerät nach Figur 4 ist ein Sekundärwärmetauscher 75 für das Brauchwasser in einen Heizwasserspeicher 76 integriert und dieser vorzugsweise als Wasserteil eines Ausdehnungsgefäßes ausgebildet. Der Sekundärwärmetauscher 75 hat eine brauchwasserführende Rohrschlange 77, die mit einem Kaltwasseranschluß 78 und einem Warmwasseranschluß 79 verbunden ist. Die Rohrschlange 77 ist koaxial von einem Heizwasserrohr 80 umgeben, das eine im Wasservolumen des Heizwasserspeichers 76 liegende Eingangsöffnung 81 hat und ausgangsseitig an den zweiten Eingang eines Umsteuerventils 82 angeschlossen ist, das in Reihe mit einer Umwälzpumpe 83 in einer Rücklaufleitung 84, 85 liegt. Das Umsteuerventil 82 ist zur Verringerung des Verrohrungsaufwandes in den Heizwasserspeicher 76 integriert. Bei einer alternativen Ausführung könnte auch die Umwälzpumpe 83 samt Teilen der Rücklaufleitung in den Heizwasserspeicher integriert und ein Entlüftungsventil 86 an dessen Gehäuse angebaut sein.

Die Rücklaufleitung 84, 85 führt zu einem Primärwärmetauscher 87, an dem ausgangsseitig eine Vorlaufleitung 88 angeschlossen ist. Diese geht durch den Heizwasserspeicher 76 hindurch und ist dort mit einer Ausgangsöffnung 89 versehen, durch welche das zufließende Heizwasser in den Heizwasserspeicher 76 gelangt. In diesem ist eine Trennwand 90 eingebaut, die den Sekundärwärmetauscher 75 mit Abstand umgibt und eine erste Öffnung 91 hat, die der Ausgangsöffnung 89 benachbart gegenüberliegt. Die Trennwand 90 ist mit einer zweiten Öffnung 92 versehen, welche in einer entfernten Speicherzone angeordnet ist.

Im Heizwasserspeicher 76 ist eine sekundäre Ventileinrichtung in Form eines einfachen Auf-Zu-Ventils 93 angeordnet, das die Öffnung 91 in der Trennwand 90 überwacht. Das Heizwasserrohr, das um die Rohrschlange 77 einen Strömungskanal 94 bildet, ist bis nahe an die Öffnung 91 herangeführt. Das synchron mit der Umwälzpumpe geschaltete, vereinfacht dargestellte Auf-Zu-Ventil 93 schließt die Öffnung 91, wenn und solange die Pumpenleistung einen vorgegebenen Wert unterschreitet. Das zufließende Heizwasser muß dabei erst durch den Heizwasserspeicher 76 strömen, bis es in den Strömungskanal 94 eintreten und zum Umsteuerventil 82 gelangen kann. Bei der höheren Pumpenleistung öffnet das Auf-Zu-Ventil 93, so daß das Heizwasser durch die Öffnung 91 direkt in den Strömungskanal 94 gelangt.

## Patentansprüche

1. Gerät zum Bereiten von Heizwasser und Brauchwasser, mit einem von einer Wärmequelle beaufschlagten, vom Heizwasser durchflossenen Primärwärmetauscher, der über ein Umsteuerventil und eine Umwälzpumpe bedarfsabhängig mit Anschlüssen für ein externes Heizungsnetz und mit einem internen Leitungssystem verbindbar ist, das einen über einen Heizwasserspeicher zu einem Sekundärwärmetauscher für das Brauchwasser führenden ersten Leitungszweig, einen den Heizwasserspeicher umgehenden, unmittelbar zum Sekundärwärmetauscher führenden zweiten Leitungszweig, sowie eine sekundäre Ventileinrichtung enthält, mit deren Hilfe wahlweise der erste oder zweite Leitungszweig aktiviert werden kann, **gekennzeichnet durch** folgende Merkmale,
a) die Leistung der Umwälzpumpe (17, 83) ist in mindestens zwei Stufen schaltbar,
b) die sekundäre Ventileinrichtung (33, 39, 64) ist abhängig von der Leistung der Umwälzpumpe (17, 83) derart gesteuert, daß bei geringerer Leistung der erste Leitungszweig (30) und bei höherer Leistung der zweite Leitungszweig (34) des internen Leitungssystems (20) aktiviert ist.

2. Gerät nach Anspruch 1, **dadurch gekennzeichnet, daß** die Umschaltung der Pumpenleistung auf eine höhere Stufe in Abhängigkeit von der Temperatur des dem internen Leitungssystems (20) zulaufenden Heizwassers bzw. des auslaufenden Brauchwassers erfolgt.

3. Gerät nach Anspruch 1 oder 2, **dadurch gekennzeichnet, daß** - eine Sparschaltung ein Aufheizen des Heizwasserspeichers (31) unterbindet und beim Zapfen von Brauchwasser ein sofortiges Aktivieren des zweiten Leitungszweiges (34) vorsieht.

4. Gerät nach einem der Ansprüche 1 bis 3, **dadurch gekennzeichnet, daß** die sekundäre Ventileinrichtung (33, 39, 64) als ein mit zwei Ausgängen versehenes Umsteuerventil ausgebildet ist.

5. Gerät nach Anspruch 4, **dadurch gekennzeichnet, daß** zu einer vom Fördervolumen der Umwälzpumpe abhängigen Steuerung des Umsteuerventils (39, 64) dessen Zulaufanschluß (41, 65) in ein düsenartig verengtes Rohr (54, 65) mündet, das gegen eine kugelig ausgebildete Umlenkfläche (46, 66) eines beweglich gelagerten Steuergliedes (47, 67) gerichtet ist, welches durch Federkraft gegen das Rohr (54, 65) gedrückt ist und mit den Mündungsrändern der Ausgangsöffnungen (59, 60, 70, 71) zusammenarbeitende Schließflächen trägt.

6. Gerät nach Anspruch 5, **dadurch gekennzeichnet, daß** das Steuerglied (67) ein schwenkbar gelagerter doppelarmiger Hebel ist, der an einem Arm die schalenförmige Umlenkfläche (66) trägt und dessen anderer Arm zwischen die beiden sich koaxial gegenüberliegenden Mündungsränder der Ausgangsöffnungen (70, 71) greift und dort ein beidseitig mit den Schließflächen versehenes Schließglied (69) beweglich angelenkt trägt.

7. Gerät nach Anspruch 1, **dadurch gekennzeichnet, daß** der Sekundärwärmetauscher (75) wie an sich bekannt in den Heizwasserspeicher (76) integriert ist und dieser vorzugsweise den wasserseitigen Teil eines Ausdehnungsgefäßes bildet.

8. Gerät nach Anspruch 7, **dadurch gekennzeichnet, daß** eine das Brauchwasser führende Rohrschlange (77) von einem im Wasservolumen des Heizwasserspeichers (76) liegenden, heizwasserführenden Strömungskanal (94) umgeben ist, dessen ausgangsseitiges Ende an eine den Primärwärmetauscher (87) mit dem Rücklaufanschluß für das Heizungsnetz verbindende Rücklaufleitung (84, 85) angeschlossen ist und dessen eingangsseitige Öffnung (81) zum Eintritt des im Heizwasserspeicher (76) befindlichen Heizwassers bestimmt ist, und daß ferner die sekundäre Ventileinrichtung (93) den Zugang des Heizwassers zum Eingang des Strömungskanales (94) überwacht.

9. Gerät nach Anspruch 8, **dadurch gekennzeichnet, daß** die sekundäre Ventileinrichtung (93) ein einfaches Auf-Zu-Ventil ist, das eine der eingangsseitigen Öffnung (81) des Strömungskanals (94) benachbarte Durchgangsöffnung (91) in einer Leitwand (90) steuert, welche das in den Heizwasserspeicher (76) einströmende Wasser vom Eingang des Strömungskanales (94) weg in eine entferntere Speicherzone leitet.

10. Gerät nach einem der vorhergehenden Ansprüche, **dadurch gekennzeichnet, daß** außer dem Sekundärwärmetauscher (75) auch das Umsteuerventil (82), die sekundäre Ventileinrichtung (93) und vorzugsweise auch die Umwälzpumpe (83) in den Heizwasserspeicher (76) integriert sind.

11. Gerät nach einem der vorhergehenden Ansprüche, **dadurch gekennzeichnet, daß** in den Startphasen und beim Zapfen kleiner Brauchwassermengen ein Kurzschlußkreis aktiviert ist, der unter Ausschluß des Primärwärmetauschers nur über eine Umwälzpumpe und das interne Leitungssystem des Sekundärwärmetauschers führt.

12. Gerät nach Anspruch 11, **dadurch gekennzeichnet, daß** der Kurzschlußkreis das als Vier-Wege-Ventil ausgebildete Umsteuerventil und die in einer der vom Primärwärmetauscher zu den Heizungsnetzanschlüssen führenden Leitungen eingebauten Umwälzpumpe enthält.

13. Gerät nach Anspruch 11, **dadurch gekennzeichnet, daß** im Kurzschlußkreis eine eigene Umwälzpumpe und ein Rückschlagventil vorgesehen sind.

## Claims

1. Appliance for the preparation of heating water and service water, with a primary heat exchanger which is acted upon by a heat source and through which the heating water flows and which can be connected via a reversing valve and a circulating pump, as a function of demand, to connections for an external heating network and to an internal line system which contains a first line branch leading via a heating-water store to a secondary heat exchanger for the service water, a second line branch bypassing the heating-water store and leading directly to the secondary heat exchanger and a secondary valve device, with the aid of which the first or the second line branch can be activated selectively, **characterized by** the following features,
a) the power of the circulating pump (17, 83) can be switched in at least two steps,
b) the secondary valve device (33, 39, 64) is controlled as a function of the power of the circulating pump (17, 83), in such a way that, in the case of lower power, the first line branch (30) and, in the case of higher power, the second line branch (34) of the internal line system (20) is activated.

2. Appliance according to Claim 1, **characterized in that** the changeover of the pump power to a higher step takes place as a function of the temperature of the heating water flowing into the internal line system (20) or of the outflowing service water.

3. Appliance according to Claim 1 or 2, **characterized in that** a saver circuit prevents the heating-water store (31) from heating up and provides for an immediate activation of the second line branch (34) in the event of the tapping of service water.

4. Appliance according to one of Claims 1 to 3, **characterized in that** the secondary valve device (33, 39, 64) is designed as a reversing valve provided with two outlets.

5. Appliance according to Claim 4, **characterized in that**, for a control of the reversing valve (39, 64) which is a function of the feed volume of the circulating pump, the inflow connection (41, 65) of the said reversing valve issues into a tube (54, 65) which is narrowed in a nozzle-like manner and which is directed towards a spherically designed deflection surface (46, 66) of a movably mounted control member (47, 67) which is pressed towards the tube (54, 65) by spring force and which carries closing surfaces cooperating with the issuing edges of the outlet orifices (59, 60, 70, 71).

6. Appliance according to Claim 5, **characterized in that** the control member (67) is a pivotably mounted double-armed lever which carries the shell-shaped deflection surface (66) on one arm and the other arm of which engages between the two coaxially mutually opposed issuing edges of the outlet orifices (70, 71) and carries there, movably articulated, a closing member (69) provided on both sides with the closing surfaces.

7. Appliance according to Claim 1, **characterized in that** the secondary heat exchanger (75) is integrated into the heating-water store (76), as is known per se, and the latter preferably forms the water-side part of an expansion vessel.

8. Appliance according to Claim 7, **characterized in that** a pipe coil (77) carrying the service water is surrounded by a flow duct (94) which lies in the water volume of the heating-water store (76) and carries heating water and the outlet-side end of which is connected to a return line (84, 85) connecting the primary heat exchanger (87) to the return connection for the heating network and the inlet-side orifice (81) of which is intended for the ingress of the heating water located in the heating-water store (76), and **in that**, furthermore, the secondary valve device (93) monitors the access of the heating water to the inlet of the flow duct (94).

9. Appliance according to Claim 8, **characterized in that** the secondary valve device (93) is a simple open/shut valve which controls a passage orifice (91) which is adjacent to the inlet-side orifice (81) of the flow duct (94) and is located in a guide wall (90) and which guides the water flowing into the heating-water store (76) away from the inlet of the flow duct (94) into a farther storage zone.

10. Appliance according to one of the preceding claims, **characterized in that**, in addition to the secondary heat exchanger (75), the reversing valve (82), the secondary valve device (93) and preferably also the circulating pump (83) are also integrated into the heating-water store (76).

11. Appliance according to one of the preceding claims, **characterized in that**, in the starting phases and in the event of the tapping of small service-water quantities, a short-circuit is activated, which, excluding the primary heat exchanger, leads solely via a circulating pump and the internal line system of the secondary heat exchanger.

12. Appliance according to Claim 11, **characterized in that** the short-circuit contains the reversing valve designed as a four-way valve and the circulating pump installed in one of the lines leading from the primary heat exchanger to the heating-network connections.

13. Appliance according to Claim 11, **characterized in that** a specific circulating pump and a non-return valve are provided in the short-circuit.

## Revendications

1. Appareil pour la préparation d'eau de chauffage et d'eau sanitaire, avec un échangeur de chaleur primaire alimenté par une source de chaleur, parcouru par de l'eau chaude, qui peut être raccordé par une vanne d'inversion et un circulateur aux raccordements d'un réseau de chauffage externe et à un système de conduites interne, qui comprend un premier branchement conduisant à un échangeur de chaleur secondaire pour l'eau sanitaire au travers d'un réservoir d'eau chaude, un second branchement conduisant directement à l'échangeur de chaleur secondaire en contournant le réservoir d'eau chaude, ainsi qu'un dispositif de vannes secondaire à l'aide duquel on peut activer au choix le premier ou le second branchement,
**caractérisé par**
les caractéristiques suivantes,
a) la puissance du circulateur (17, 83) a au moins deux niveaux de commutation,
b) le dispositif de vannes secondaire (33, 39, 64) est commandé en fonction de la puissance du circulateur (17, 83) de façon que le premier branchement (30) du système de conduites interne (20) soit activé pour une faible puissance, et le second branchement (34) pour une forte puissance.

2. Appareil selon la revendication 1,
**caractérisé en ce que**
la commutation de la puissance de la pompe à un niveau haut s'effectue en fonction de la température de l'eau chaude entrant dans le système de conduites interne (20), respectivement de l'eau sanitaire en sortant.

3. Appareil selon la revendication 1 ou 2,
**caractérisé en ce que**
un circuit économiseur d'énergie arrête le chauffage du réservoir d'eau chaude (31) et en cas de tirage d'eau sanitaire, prévoit une activation immédiate du second branchement (34).

4. Appareil selon l'une quelconque des revendications 1 à 3,
**caractérisé en ce que**
le dispositif de valves secondaire (33, 39, 64) est constitué comme une vanne d'inversion équipée de deux sorties.

5. Appareil selon la revendication 4,
**caractérisé en ce qu'**
on commande la vanne d'inversion (39, 64) en fonction de la cylindrée du circulateur, vanne d'inversion dont le raccordement d'entrée (41, 65) débouche sur un tuyau resserré en forme de tuyère (54, 65), qui est dirigé contre la surface de déflexion de forme sphérique (46, 66) d'un élément de commande monté de manière à être mobile (47, 67), lequel est poussé contre le tuyau (54, 65) par la force d'un ressort et qui supporte les surfaces de fermeture associées aux bords des bouches de sorties (59, 60, 70, 71).

6. Appareil selon la revendication 5,
**caractérisé en ce que**
l'élément de commande (67) est un levier à deux bras monté de manière à pouvoir pivoter, qui supporte sur un bras la surface de déflexion en forme de bol (66) et dont l'autre bras se place entre les deux bords des bouches de sorties (70, 71) qui se font face de manière coaxiale, et qui supporte à cet endroit un élément de fermeture mobile (69) à double face équipé des surfaces de fermeture.

7. Appareil selon la revendication 1,
**caractérisé en ce que**
l'échangeur de chaleur secondaire (75) connu en soi, est intégré dans le réservoir d'eau chaude (76) et celui-ci constitue de préférence la partie côté eau d'un vase d'expansion.

8. Appareil selon la revendication 7,
**caractérisé en ce que**
un serpentin (77) conduisant l'eau sanitaire est entouré d'une conduite de circulation (94) d'eau chaude se trouvant dans le volume d'eau du réservoir d'eau chaude (76), dont l'extrémité côté sortie est raccordée à une conduite de retour (84, 85) reliant l'échangeur de chaleur primaire (87) au raccord de retour du réseau de chauffage, et dont l'orifice côté entrée (81) est défini pour l'entrée de l'eau chaude se trouvant dans le réservoir d'eau chaude (76), et en outre, le dispositif de vannes secondaire (93) contrôle l'accès de l'eau chaude à l'entrée de la conduite de circulation (94).

9. Appareil selon la revendication 8,
**caractérisé en ce que**
le dispositif de vannes secondaire (93) est une simple vanne tout ou rien, qui commande, au voisinage de l'orifice côté entrée (81) de la conduite de circulation (94), un orifice de passage (91) d'une paroi (90), laquelle conduit l'eau affluant dans le réservoir d'eau chaude (76) de l'entrée de la conduite de circulation (94) vers une zone plus éloignée du réservoir.

10. Appareil selon les revendications précédentes,
**caractérisé en ce que**
en plus de l'échangeur de chaleur secondaire (75), la valve d'inversion (82), le dispositif de vannes secondaire (93) et de préférence aussi le circulateur (83) sont aussi intégrés dans le réservoir d'eau chaude (76).

11. Appareil selon les revendications précédentes,
**caractérisé en ce que**
dans les phases de démarrage et en cas de tirage de faibles quantités d'eau sanitaire, un circuit fermé est activé, qui passe uniquement par le circulateur et le système de conduites interne de l'échangeur de chaleur secondaire, excluant l'échangeur de chaleur primaire.

12. Appareil selon la revendication 11,
**caractérisé en ce que**
le circuit fermé comprend la vanne d'inversion constituée comme une vanne quatre voies et le circulateur inséré dans l'une des conduites allant de l'échangeur de chaleur primaire aux raccordements du réseau de chauffage.

13. Appareil selon la revendication 11,
**caractérisé en ce que**
le circuit fermé comporte une pompe de circulation propre et un clapet anti-retour.
